# EUROPÄISCHE PATENTANMELDUNG

(11) **EP 3 088 246 A1**
(43) Veröffentlichungstag der Anmeldung: **02.11.2016**
(21) Anmeldenummer: 16000884.3
(22) Anmeldetag: 18.04.2016
(51) Int. Cl.: B60P 3/39

(54) **CAMPINGBOX**

(30) Priorität: 27.04.2015 DE 102015005661; 27.04.2015 DE 202015003231 U
(71) Anmelder: Schröder, Karl H., Hong Kong (CN)
(72) Erfinder: Schröder, Karl H., Hong Kong (CN)
(74) Vertreter: Kietzmann, Manfred

(57) **Zusammenfassung**

Die Campingbox besteht aus einem quaderförmigen Kasten 1 mit der Vorderwand 2, der Rückwand 3 sowie die Vorder- und Rückwand 2, 3 verbindende Seitenwände 4, 5.

Die Liegefläche ist segmentiert und erstreckt sich oberhalb des Kastens 1. An den Seitenwänden 4, 5 sind verschwenkbare quaderförmige erste und zweite Schrankteile 10 und 12 angeordnet, wobei die zweiten Schrankteile 12 die Vorderwand 2 in der Liegeflächenebene überragen. Die Schrankteile 12 lassen sich angeklappt an die Vorderfront 11 der Schrankteile 10 in eine Öffnung 9 des Kastens 1 verschwenken.

## Beschreibung

Die Erfindung betrifft eine mobile Campingbox, die in ein Fahrzeug oder auch in ein Zelt einsetzbar ist, und eine Schlafmöglichkeit schafft sowie über Staumöglichkeiten verfügt.

Derartige Vorrichtungen sind bekannt. So wird in der gattungsbildenden DE 20 2011 106 152 eine Mobile Campingeinheit mit Nutzraum und Liegefläche und einer im Wesentlichen rechteckigen Grundfläche vorgeschlagen, bei der sich der Nutzraum im unteren Bereich und die Liegefläche im oberen Bereich der Campingeinheit befinden, wobei die Liegefläche segmentiert ist und von einem Transportzustand, in welchem sämtliche Segmente der Liegefläche übereinander, im Wesentlichen kongruent zur Grundfläche der Campingeinheit angeordnet sind, in einen Benutzungszustand, in welchem die Segmente der Liegefläche innerhalb einer Ebene auf der Höhe des oberen Bereichs der Campingeinheit angeordnet sind, überführt werden kann und die Liegefläche im Benutzungszustand an einem Ende im Wesentlichen kongruent zur Grundfläche der Campingeinheit angeordnet und am gegenüberliegenden Ende durch mindestens ein zusätzliches Mittel abgestützt oder abgehängt ist.

Das modulare Transport- und Schlafsystem gemäß der DE 197 56 134 A1 soll es ermöglichen, auf der Ladefläche bei geschlossenen Kraftfahrzeugen ein Transportsystem aufsitzend zu befestigen, und dabei die Ladefläche möglichst nicht zu verkleinern. Weiterhin soll durch die Um- und Ausrüstbarkeit in Kraftfahrzeugen, deren Ladefläche unter 190 cm lang ist, mit dem integrierten Schlafsystem eine horizontale Fläche erstellt werden, welche im Optimalfall mindestens 190 cm ist. Um das Transportieren von Ladegut sicherzustellen, wird vorgeschlagen, möglichst die gesamte Ladefläche eines Pkw-Kombi auszunutzen. Somit wird die Ladefläche mit meist rechteckigen Kästen, den Grundmodulen, nahezu ausgefüllt. Die Grundmodule entsprechen der Mindesthöhe der umgeklappten Rückbank des jeweiligen Fahrzeugs. Diese Grundmodule sind mit Deckeln versehen, die einen Teil der Schlaffläche bilden. Um eine Mindestlänge der Schlaffläche von ca. 180 cm zu erreichen, ist das System mit einer Vorrichtung versehen, welche ermöglicht, die noch erforderliche Schlafplatte/n zu tragen. Das erfindungsgemäße System kommt besonders in Pkw-Kombi, Van, Mini Van und Hochraumlimousinen zum Einsatz.

Der Nachteil dieser Lösungen besteht in erster Linie darin, dass sich der Stauraum ausschließlich unterhalb der Liegefläche befindet und damit schlecht zugängig ist.

Weiterhin sind für Campingzwecke einsetzbare Anhänger bekannt. So beschreibt die GB 2 411 155 A das Anbringen von Küchenelementen und anderen Einrichtungen an der Innenseite von um vertikale Achsen schwenkbaren Türen.

Aus der FR 2 513 097 A1 ist das Anbringen eines um zwei horizontale Achsen schwenkbaren Regals an der Wandung eines klappbaren Anhängers bekannt.

Die FR 1 585 788 A beschreibt ein um ein Scharnier schwenkbares Schrankteil, welches aus einer horizontalen Position in eine Aufstellposition senkrecht zur Liegeflächenebene überführt und in der vertikalen Position verriegelt werden kann.

Bei diesen Lösungen handelt es sich nicht um eine selbsttätige Box, die in ein Fahrzeug oder ein Zelt einsetzbar ist, sondern um einen Anhänger der ausschließlich zu Campingzwecken nutzbar ist und über einige notwendige Grundausstattungen verfügt.

Aufgabe der Erfindung ist es, bei einer mobilen Campingbox zusätzlich Stauraum auch oberhalb der Liegefläche zu schaffen. Gelöst wird diese Aufgabe mit den Merkmalen des Anspruches 1. Vorteilhafte Ausgestaltungen sind Gegenstand der Unteransprüche.

Die erfindungsgemäße Campingbox weist mindestens auf einen quaderförmigen Kasten
mit einer Vorderwand, einer Rückwand sowie zwei die Vorder- und Rückwand verbindende Seitenwände und mit einer Liegeflächenebene, die sich oben auf dem Kasten erstreckt,
mit einem ersten Liegeflächensegment, das die Rückwand und gegenüberliegende Abschnitte der Seitenwände in der
Liegeflächenebene miteinander verbindet, derart, dass eine freie Öffnung mit der Breite (B3) in dem Kasten verbleibt,
mit einem zweiten Liegeflächensegment, das sich an das erste Liegeflächensegment anschließt und entfernbar angeordnet ist,
mit jeweils einem oben an den Seitenwänden schwenkbar angeordneten quaderförmigen ersten Schrankteil mit einer Vorderfront und mit einer Breite (B1), wobei die Schrankteile jeweils schwenkbar sind aus einer Position teilweise mit der Vorderfront über dem ersten Liegeflächensegment oder teilweise mit der Vorderfront aufliegend auf dem ersten Liegeflächensegment in eine Aufstellposition mit der senkrecht zur Liegeflächenebene stehenden Vorderfront und umgekehrt,
mit jeweils einem schwenkbar und seitlich in Richtung Vorderwand am jeweils ersten Schrankteil angeordneten zweiten quaderförmigen Schrankteil mit einer Vorderfront und der Breite (B2), wobei die zweiten Schrankteile jeweils schwenkbar sind aus einer Aufstellposition fluchtend zum jeweils ersten Schrankteil in eine Position des teilweisen Aneinanderliegens der Vorderfronten der jeweils ersten und zweiten Schrankteile und umgekehrt,
wobei die Breiten (B1, B2 und B3) der ersten und zweiten Schrankteile und der freien Öffnung so aufeinander abgestimmt sind, dass das jeweils an die Vorderfront des ersten Schrankteils angeschwenkte zweite Schrankteil nach dem Verschwenken der ersten Schrankteile in Richtung des ersten Liegeflächensegmentes durch die freie Öffnung in das Innere des Kastens gelangt,
und mit einem dritten Liegeflächensegment, das in der Liegeflächenebene an das zweite Liegeflächensegment anschließt und zwischen den sich in der Aufstellposition befindlichen Schrankteilen einlegbar und/oder einschwenkbar ist.

Die vorgeschlagene Campingbox verfügt somit über oberhalb der Liegefläche angeordnete Schrankteile als Stauraum. Die Schrankteile lassen sich zu Transportzwecken in die Campingbox bzw. auf die Campingbox klappen, so dass ein kompakter Transportgegenstand vorhanden ist.

In einer bevorzugten Ausführung verfügt der Kasten über eine Zwischendecke, auf die die zweiten Schrankteile im zusammengeklappten Zustand mit der Rückwand aufliegen, wodurch gleichzeitig ein Teil der ersten Schrankteile beabstandet über dem ersten Liegeflächensegment gehalten wird.

Das zweite Liegeflächensegment besteht in einer bevorzugten Ausführung aus zwei Teilsegmenten, die verschwenkbar zueinander miteinander verbunden sind. Das zweite Liegeflächensegment ist so leichter händelbar und kann in der Aufstellposition geöffnet werden, wodurch ein Zugang in das Innere des Kastens besteht.

Die zweiten Schrankteile überragen in der Aufstellposition bei einer bevorzugten Ausführung die Vorderwand in der Liegeflächenebene. Damit vergrößert sich nicht nur der Stauraum, sondern werden die Voraussetzungen für eine Verlängerung der Liegefläche geschaffen.

So sieht eine bevorzugte Ausführung weiter vor, dass das dritte Liegeflächensegment aus zwei Teilsegmenten besteht, wobei ein Teilsegment die sich in der Aufstellposition befindlichen zweiten Schrankteile in der Liegeflächenebene überragt.

Das die zweiten Schrankteile in der Liegeflächenebene überragende Teilsegment kann dann in einer bevorzugten Ausführung durch eine die zweiten Schrankteile außerhalb des Kastens verbindende Stützbrücke oder durch außerhalb des Kastens an den zweiten Schrankteilen angeordnete Auflagen abgestützt sein. So lässt sich selbsttragend eine Liegeflächenlänge der gewünschten Länge bei klein bleibendem Kasten realisieren.

Eine weitere vorteilhafte Ausgestaltung sieht vor, dass das die zweiten Schrankteile in der Liegeflächenebene überragende Teilsegment des dritten Liegeflächensegmentes oben an der Vorderwand verschwenkbar und mindestens nach außen an die Vorderwand heranschwenkbar angeordnet ist.

Bei einer anderen Ausführung des mindestens dritten Liegeflächensegmentes sind deren Teilsegmente zueinander um mindestens 90° verschwenkbar verbunden, wobei das Teilsegment im Übergangsbereich zum zweiten Liegeflächensegment um mindestens 90° verschwenkbar an einer parallel zur Vorderwand angeordneten Trennwand des Kastens befestigt ist.
Dabei sollte die Breite (B4) des im Übergangsbereich zum zweiten Liegeflächensegment liegenden Teilsegmentes mindestens der Tiefe (T1) der Schrankteile entsprechen. Die dadurch erzielbaren Anordnungsmöglichkeiten werden im Ausführungsbeispiel näher erläutert.

Um die Campingbox sicher in einem Fahrzeug anordnen zu können, sieht eine weitere Ausgestaltung vor, dass die Seitenwände gegenüberliegende Öffnungen aufweisen für Zurrgurte zum Befestigen des Kastens an der Fahrzeugkarosserie.

Um für die Campingbox optimal den Fahrzeuginnenraum nutzen zu können, weisen bei einer bevorzugten Ausführung die in der Aufstellposition obigen Außenkanten der quaderförmigen Schrankteile Abschrägungen auf.

Natürlich ist der Innenraum des Kastens auch zum Verstauen von Campingzubehör nutzbar. So ist vorgesehen, dass die Rückwand eine Einschuböffnung für einen Einschub mit Spüle und Kochstelle in den Kasten aufweist sowie verschließbare Klappen von Stauräumen im Kasten.

Weiter sieht eine vorteilhafte Ausgestaltung vor, dass oben an der Rückwand eine zum Transport außen an die Rückwand heranschwenkbare Blendwand angeordnet ist.

Um die Campingbox gut reinigen zu können und Gerüche zu vermeiden, wie sie z.B. bei einer Holzausführung entstehen können, ist vorgesehen, dass mindestens der Kasten, die Schrankteile, die Liegeflächen- und Teilsegmente und die Blendwand aus Kunststoff hergestellt sind.

Zum Verbinden und Feststellen der Teile der Campingbox werden bevorzugt mit der Hand lös- und feststellbare Rändelschrauben eingesetzt.

Bei einer weiteren vorteilhaften Ausgestaltung ist vorgesehen, dass oben auf den Schränken eine weitere Liegefläche entfernbar angeordnet ist.

Die Erfindung soll anhand der Zeichnungen erläutert werden. Es zeigen:
- Fig. 1:: die Campingbox im benutzbaren Zustand mit Blick auf die Vorderwand,
- Fig. 2:: die Campingbox im benutzbaren Zustand mit Blick auf die Rückwand,
- Fig. 3:: das Verschwenken der Schrankteile,
- Fig. 4:: die zusammengelegte Campingbox,
- Fig. 5:: eine verkleinerte Campingbox und
- Fig. 6:: eine Campingbox mit weiterer Liegefläche.

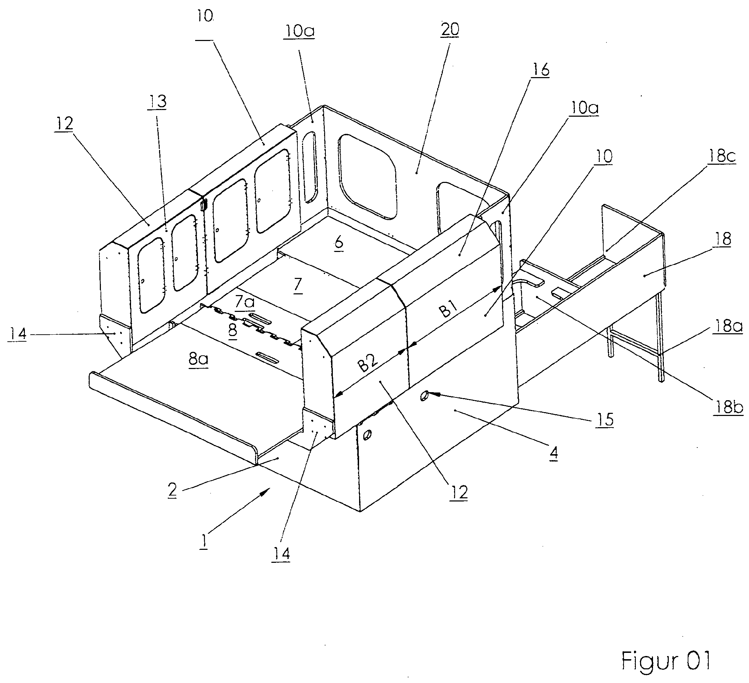

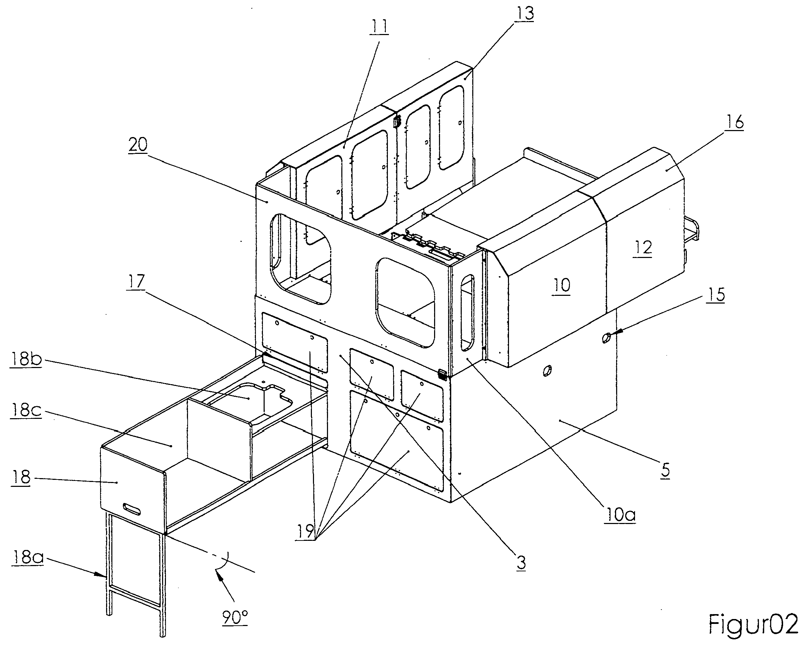

Die **Fig. 1** und **2** zeigen die aufgeklappte Campingbox mit Liegefläche mit Blick auf die Vorderwand 2 bzw. mit Blick auf die Rückwand 3.

Die Campingbox besteht aus einem quaderförmigen Kasten 1 mit der Vorderwand 2, der Rückwand 3 sowie die Vorder- und Rückwand 2, 3 verbindende Seitenwände 4, 5.

Die Liegeflächenebene erstreckt sich oberhalb des Kastens 1.

An den Seitenwänden 4, 5 sind verschwenkbare quaderförmige erste und zweite Schrankteile 10 und 12 mit den Breiten B1 und B2 und den Vorderfronten 11, 13 angeordnet, wobei die zweiten Schrankteile 12 die Vorderwand 2 in der Liegeflächenebene überragen.

Die in der Aufstellposition dargestellten obigen Außenkanten der quaderförmigen Schrankteile 10, 12 weisen Abschrägungen 16 auf, um den Fahrzeuginnenraum optimal auszunutzen.

Die Liegefläche selbst ist segmentiert.

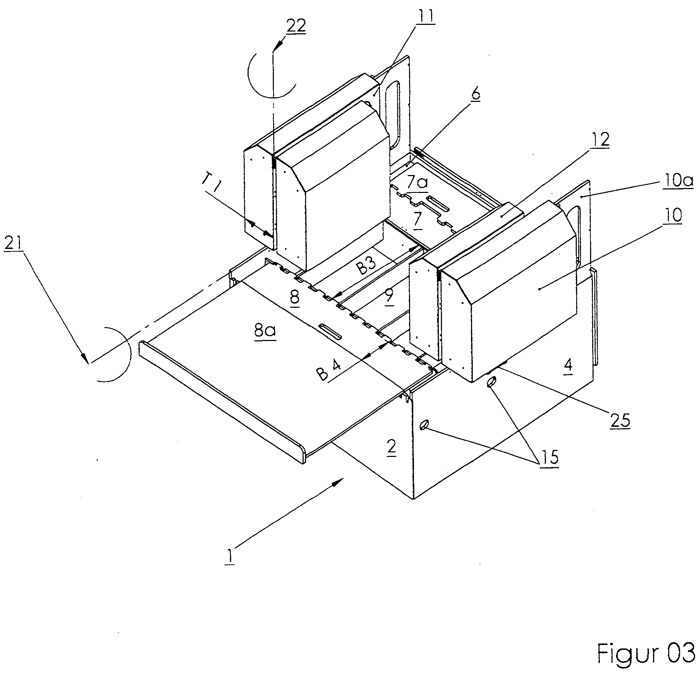

Das erste Liegeflächensegment 6 verbindet die Rückwand 3 und gegenüberliegende Abschnitte der Seitenwände 4, 5 in der Liegeflächenebene miteinander, derart, dass eine freie Öffnung 9 mit der Breite B3 in dem Kasten 1 verbleibt (Fig. 3). Die Öffnung dient der Aufnahme der Schrankteile 12 wie noch gezeigt wird.

An das erste Liegeflächensegment 6 schließt sich in der Liegeflächenebene das zweite Liegeflächensegment 7, 7a an, das zwischen den sich in der hier dargestellten Aufstellposition befindlichen Schrankteilen 10, 12 einlegbar und herausnehmbar angeordnet ist.

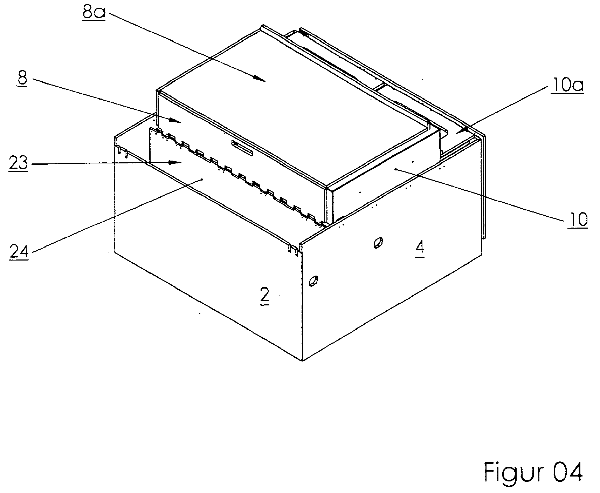

Das zweite Liegeflächensegment 7, 7a ist in zwei Teilsegmente 7 und 7a unterteilt, die verschwenkbar zueinander miteinander verbunden sind. Durch das Aufklappen des Teilsegmentes 7a ist so ein Zugang in den Kasten vorhanden. Beim Zusammenklappen der Campingbox wird das zweite Liegeflächensegment herausgenommen, werden die beiden Teilsegmente 7 und 7a zusammengeklappt und es erfolgt entweder eine Ablage auf dem ersten Liegeflächensegment 6 oder in dem Raum zwischen der Trennwand 23 und der Vorderwand 2 (Vgl. Fig. 4).

Das hier dargestellte dritte Liegeflächensegment 8, 8a besteht aus zwei Teilsegmenten 8 und 8a, wobei das Teilsegment 8a die sich in der Aufstellposition befindlichen zweiten Schrankteile 12 in der Liegeflächenebene überragt. Die Teilsegmente 8 und 8a sind mindestens 90° zueinander verschwenkbar.

Das Teilsegment 8 ist oben an der Trennwand 23 verschwenkbar angeordnet.
Das Teilsegment 8a ist durch eine die Schrankteile 12 außerhalb des Kastens 1 verbindende Stützbrücke 14 abgestützt.

Die Stützbrücke 14 ist lösbar an den Seitenwänden der Schrankteile 12 fixiert z. B. angeschraubt mittels mit der Hand lös- und feststellbarer Rändelschrauben.

Derartige Rändelschrauben finden bevorzugt bei allen Verbindungen der Campingboxteile Verwendung.

Der Innenraum des Kastens 1 verfügt auch hier über Stauraum. So weist die Rückwand 3 eine Einschuböffnung 17 in den Kasten 1 für einen Einschub 18 mit Spüle 18b und Kochstelle 18c auf sowie verschließbare Klappen 19 von Stauräumen im Kasten 1. Der herausgezogene Einschub 18 ist durch eine an den Boden des Einschubes 18 anklappbare Stütze 18a abgestützt.

Weiter wird gezeigt, dass oben an der Rückwand 3 eine außen an die Rückwand 3 heranschwenkbare Blendwand 20 angeordnet ist. In der dargestellten Aufstellposition kann die Blendwand 20 mit den Schrankteilen 10 verbunden sein. Bevorzugt erfolgt dies über die Blendwände 10a an den Seiten der Schrankteile 10.

Der Kasten 1, die Schrankteile 10, 12, die Liegeflächen- und Teilsegmente 6, 7, 7a, 8, 8a und die Blendwände 20 und 10a sind bei der dargestellten Campingbox aus Kunststoff hergestellt.

In **Fig. 3** und **4** wird das "Zusammenklappen" der Campingbox dargestellt.

Vorausgeschickt ist, dass die Schrankteile 10 jeweils schwenkbar sind aus einer Position teilweise mit der Vorderfront 11 über dem ersten Liegeflächensegment 6 oder bei hier abgelegten Teilsegmenten 7 und 7a des zweiten Liegeflächensegmentes 7, 7a über diesen in die Aufstellposition mit der senkrecht zur Liegeflächenebene stehenden Vorderfront 11 und umgekehrt.

Das heißt der Schwenkwinkel beträgt mindestens 90° um die Schwenkachse 21.

In der Aufstellposition sind die Schrankteile 10 durch außen an den Seitenwände 4, 5 anschraubbare Stützen 25 abgestützt. Diese Stützen 25 lassen sich für den Transport abschrauben.

Die jeweils zweiten quaderförmigen Schrankteile 12 mit der Vorderfront 13 und der Breite B2 sind jeweils schwenkbar und seitlich in Richtung Vorderwand 2 am jeweils ersten Schrankteil 10 angeordnet, wobei die zweiten Schrankteile 12 jeweils schwenkbar sind aus einer Aufstellposition fluchtend zum jeweils ersten Schrankteil 10 in eine Position des teilweisen Aneinanderliegens der Vorderfronten 11, 13. Teilweise deshalb, weil die Breite B1 des Schrankteils 10 größer ist als die Breite B2 des Schrankteils 12.
Das heißt, der Schwenkwinkel beträgt 180° um die Schwenkachse 22.

Nach dem Einschieben des Einschubes 18 und dem Verschließen der Klappen 19 wird die Blendwand 20 nach unten an die Rückwand 3 verschwenkt und fixiert.

Dann wird das zweite Liegeflächensegment 7, 7a mit seinen Teilsegmenten 7 und 7a herausgenommen, zusammengeklappt und auf dem ersten Liegeflächensegment 6 abgelegt. Dadurch ist die Öffnung 9 mit der Breite B3 frei.

Nach der Demontage der Stützbrücke 14 werden mögliche Verbindungen zwischen den Schrankteilen 10 und 12 gelöst und das jeweilige Schrankteil 12 um die Schwenkachse 22 geschwenkt bis es mit seiner Vorderfront 13 an der Vorderfront 11 des jeweiligen Schrankteils 10 anliegt. Vorteilhafterweise erfolgt in dieser Position eine Fixierung.
Dann wird das Schrankteil 10 zusammen mit dem Schrankteil 12 jeweils in Richtung Kasteninnenraum geschwenkt, so dass das zweite Schrankteil 12 durch die Öffnung 9 in das Innere des Kastens gelangt und die Rückwand der Schrankteile 12 sich auf einer Zwischendecke im Kasten abstützen. Zwischen dem ersten Liegeflächensegment 6 oder der auf dem ersten Liegeflächensegment 6 abgelegten Teilsegmente 7 und 7a verbleibt ein Spalt.

Da das dritte Liegeflächensegment 8, 8a aus zwei Teilsegmenten 8 und 8a besteht, die zueinander im mindestens 90° verschwenkbar verbunden sind, das Teilsegment 8 um mindestens 90° verschwenkbar an der Trennwand 23 befestigt ist und die Breite B4 des Teilsegmentes 8 mindestens der Tiefe T1 des Schrankteils 10 entspricht, lässt sich das dritte Liegeflächensegment auf die Schrankteile 10 aufklappen, wobei das Teilsegment 8 seitlich an den Schrankteilen 10 anliegt und das Teilsegment 8a auf der Rückwand der Schrankteile 10 aufliegt. Dies ist in Fig. 4 gezeigt.

Nach dem Lösen der Zurrgurte, mit denen der Kasten 1 mit der Fahrzeugkarosserie verbunden ist, wobei die Zurrgurte durch gegenüberliegende Öffnungen 15 der Seitenwände 4, 5 geführt sind, kann die so zusammengeklappte Campingbox über die Hecktür aus dem Fahrzeug entfernt und abtransportiert werden.

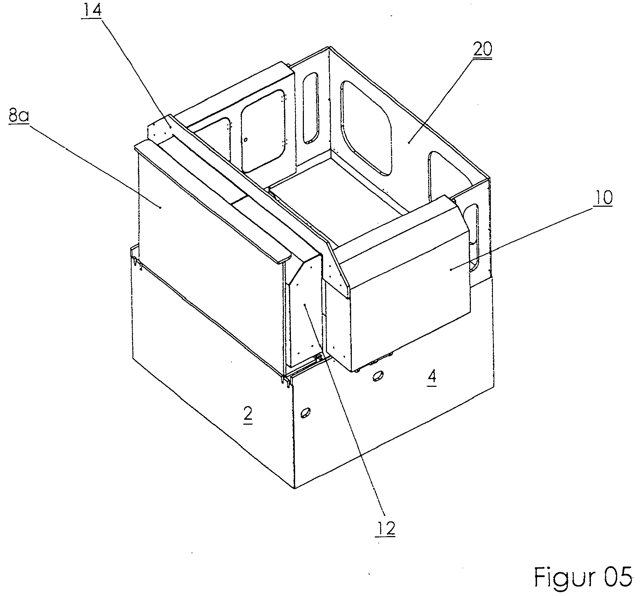

**Fig. 5** zeigt eine verkürzte Campingbox.
Auf diese Weise können Sitze oder Sitzbänke wieder in eine Sitzposition gebracht und genutzt werden, ohne dass ein vollständiges Zusammenklappen der Campingbox notwendig wird.

Dazu wird die Stützbrücke 14 demontiert. Dann werden die Schrankteile 12 um 90° um die Schwenkachse 22 über das Teilsegment 8 des dritten Liegeflächensegmentes geschwenkt und dann kann das Teilsegment 8a um 90° nach oben geklappt werden. Zweckmäßiger Weise erfolgt in dieser Position eine Fixierung. Das Verschwenken des Teilsegmentes 8a ist möglich, da die Breite B4 des Teilsegmentes 8 mindestens die Tiefe T1 der Schrankteile 12 aufweist und die Teilsegmente 8 und 8a um mindestens 90° zueinander verschwenkbar verbunden sind. Die Stützbrücke 14 kann, wie gezeigt an den Schrankteilen 10 seitlich fixiert werden und verhindert so, dass die Schrankteile 12 während der Fahrt weiter um die Schwenkachse 22 schwenken. Die Fixierung erfolgt vorzugsweise mit von der Hand bestätigbaren Rändelschrauben.

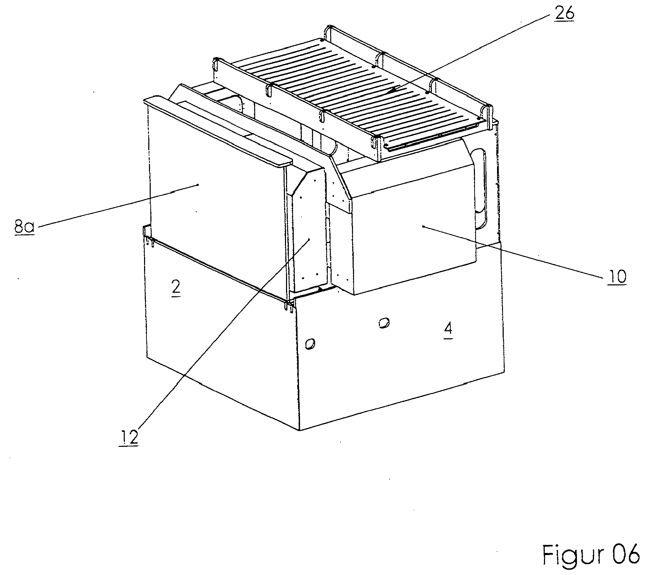

**Fig. 6** zeigt die verkürzte Campingbox mit einer weiteren Liegefläche 26, die sich auf den gegenüber stehenden Schrankteil 10 abstützt, dabei kann es sich zum Beispiel um die Liegefläche 26 für ein Kind handeln.

### Bezugszeichenliste

- 1: Kasten
- 2: Vorderwand
- 3: Rückwand
- 4: Seitenwand
- 5: Seitenwand
- 6: erstes Liegeflächensegment
- 7, 7a: zweites Liegeflächensegment
- 7: Teilsegment des zweiten Liegeflächensegmentes
- 7a: weiteres Teilsegment des zweiten Liegeflächensegmentes
- 8, 8a: drittes Liegeflächensegment
- 8: Teilsegment des dritten Liegeflächensegmentes
- 8a: weiteres Teilsegment des dritten Liegeflächensegmentes
- 9: Öffnung
- 10: erstes Schrankteil
- 10a: Blendwand zur Verbindung des Schrankteils 10 mit der Blendwand 20
- 11: Vorderfront des ersten Schrankteils
- 12: zweites Schrankteil
- 13: Vorderfront des zweiten Schrankteils
- 14: Stützbrücke
- 15: Öffnungen in Seitenwänden
- 16: Abschrägungen der obigen Außenkanten der Schrankteile
- 17: Einschuböffnung
- 18: Einschub
- 18a: einklappbare Stütze
- 18b: Spüle
- 18c: Kochstelle
- 19: verschließbare Klappen
- 20: Blendwand
- 21: Schwenkachse Schrankteil/Seitenwand
- 22: Schwenkachse Schrankteil/Schrankteil
- 23: Trennwand
- 24: zusätzlicher Stauraum
- 25: Stützen für Schrankteile
- 26: weitere Liegefläche

## Patentansprüche

1. Campingbox mindestens aufweisend einen quaderförmigen Kasten
mit einer Vorderwand, einer Rückwand sowie zwei die Vorder- und Rückwand verbindende Seitenwände und mit einer Liegeflächenebene, die sich oben auf dem Kasten erstreckt und in der im Benutzungszustand Liegeflächensegmente angeordnet sind, die aneinander anschließen sowie ein im Kasten angeordneter Einschub, **dadurch gekennzeichnet, dass**
das erste Liegeflächensegment (6) die Rückwand (3) und gegenüberliegende Abschnitte der Seitenwände (4, 5) in der Liegeflächenebene miteinander verbindet, derart, dass eine freie Öffnung (9) mit der Breite (B3) in dem Kasten (1) verbleibt,
das zweite Liegeflächensegment (7, 7a), das sich an das erste Liegeflächensegment (6) in der Liegeflächenebene anschließt, entfernbar angeordnet ist,
jeweils oben an den Seitenwänden (4, 5) schwenkbar eine quaderförmiges erstes Schrankteil (10) mit einer Vorderfront (11) und mit einer Breite (B1) angeordnet ist,
wobei die ersten Schrankteile (10) jeweils schwenkbar sind aus einer Position teilweise mit der Vorderfront (11) über dem ersten Liegeflächensegment (6) oder teilweise mit der Vorderfront (11) aufliegend auf dem ersten Liegeflächensegment (6) in eine Aufstellposition mit der senkrecht zur Liegeflächenebene stehenden Vorderfront (11) und umgekehrt,
jeweils ein zweites quaderförmiges Schrankteil (12) mit einer Vorderfront (13) und der Breite (B2) schwenkbar und seitlich in Richtung Vorderwand (2) am jeweils ersten Schrankteil (10) angeordnet ist, wobei die zweiten Schrankteile (12) jeweils schwenkbar sind aus einer Aufstellposition fluchtend zum jeweils ersten Schrankteil (10) in eine Position des teilweisen Aneinanderliegens der Vorderfronten (11, 13) der jeweils ersten und zweiten Schrankteile (10, 12) und umgekehrt,
wobei die Breiten (B1, B2 und B3) der ersten und zweiten Schrankteile (10, 12) und der freien Öffnung (9) so aufeinander abgestimmt sind, dass das jeweils an die Vorderfront (11) des ersten Schrankteils (10) angeschwenkte zweite Schrankteil (12) nach dem Verschwenken der ersten Schrankteile (10) in Richtung des ersten Liegeflächensegmentes (6) durch die freie Öffnung (9) in das Innere des Kastens (1) gelangt,
und das dritte Liegeflächensegment (8, 8a), das in der Liegeflächenebene an das zweite Liegeflächensegment (7, 7a) anschließt, zwischen den sich in der Aufstellposition befindlichen Schrankteilen (10, 12) einlegbar und/oder einschwenkbar ist.

2. Campingbox nach Anspruch 1, **dadurch gekennzeichnet, dass**
die zweiten Schrankteile (12) in der Aufstellposition die Vorderwand (2) in der Liegeflächenebene überragen.

3. Campingbox nach Anspruch 1 oder 2, **dadurch gekennzeichnet, dass**
das zweite Liegeflächensegment (7, 7a) aus zwei Teilsegmenten (7) und (7a) besteht, die verschwenkbar zueinander miteinander verbunden sind.

4. Campingbox nach einem der Ansprüche 1 bis 3, **dadurch gekennzeichnet, dass**
das dritte Liegeflächensegment (8, 8a) aus zwei Teilsegmenten (8) und (8a) besteht, wobei das Teilsegment (8a) die sich in der Aufstellposition befindlichen zweiten Schrankteile (12) in der Liegeflächenebene überragt.

5. Campingbox nach Anspruch 4, **dadurch gekennzeichnet, dass**
das Teilsegment (8a) des dritten Liegeflächensegmentes (8, 8a) durch eine die zweiten Schrankteile (12) außerhalb des Kastens (1) verbindende Stützbrücke (14) oder durch außerhalb des Kastens (9) an den zweiten Schrankteilen (12) angeordnete Auflagen abgestützt ist.

6. Campingbox nach Anspruch 4 oder 5, **dadurch gekennzeichnet, dass**
das Teilsegment (8a) des dritten Liegeflächensegmentes (8, 8a) oben an der Vorderwand (2) verschwenkbar und mindestens nach außen an die Vorderwand (2) heranschwenkbar angeordnet ist.

7. Campingbox nach Anspruch 4 oder 5, **dadurch gekennzeichnet, dass**
die zwei Teilsegmente (8) und (8a) des dritten Liegeflächensegmentes (8, 8a) zueinander um mindestens 90° verschwenkbar verbunden sind und das Teilsegment (8) im Übergangsbereich zum zweiten Liegeflächensegment (7, 7a) um mindestens 90° verschwenkbar an einer parallel zur Vorderwand (2) angeordneten Trennwand (23) befestigt ist.

8. Campingbox nach Anspruch 7, **dadurch gekennzeichnet, dass**
die Breite (B4) des Teilsegmentes (8) des dritten Liegeflächensegmentes (8, 8a) mindestens der Tiefe (T1) der Schrankteile (10) und/oder (12) entspricht.

9. Campingbox nach einem der Ansprüche 1 bis 8, **dadurch gekennzeichnet, dass**
die Seitenwände (4, 5) gegenüberliegende Öffnungen (15) aufweisen für Zurrgurte zum Befestigen der Campingbox in einem Fahrzeug.

10. Campingbox nach einem der Ansprüche 1 bis 9, **dadurch gekennzeichnet, dass**
die obigen Außenkanten der quaderförmigen Schrankteile (10, 12) in der Aufstellposition Abschrägungen (16) aufweisen.

11. Campingbox nach einem der Ansprüche 1 bis 10, **dadurch gekennzeichnet, dass**
die Rückwand (3) eine Einschuböffnung (17) für den Einschub (18) mit einer Spüle (18b) und einer Kochstelle (18c) in den Kasten (1) aufweist sowie verschließbare Klappen (19) von Stauräumen im Kasten (1).

12. Campingbox nach einem der Ansprüche 1 bis 11, **dadurch gekennzeichnet, dass**
oben an der Rückwand (3) eine außen an die Rückwand (3) heranschwenkbare Blendwand (20) angeordnet ist.

13. Campingbox nach einem der Ansprüche 1 bis 12, **dadurch gekennzeichnet, dass**
mindestens der Kasten (1), die Schrankteile (10, 12), die Liegeflächen- und Teilsegmente (6, 7, 7a, 8, 8a) und die Blendwand (20) aus Kunststoff hergestellt sind.

14. Campingbox nach einem der Ansprüche 1 bis 13, **dadurch gekennzeichnet, dass**
zum Verbinden und Feststellen der Teile der Campingbox mit der Hand lös- und feststellbare Rändelschrauben eingesetzt sind.

15. Campingbox nach einem der Ansprüche 1 bis 14, **dadurch gekennzeichnet, dass**
in der Aufstellposition oben auf den Schränken (10) und/oder (12) eine weitere Liegefläche (26) entfernbar angeordnet ist.
